(19) **Europäisches Patentamt / European Patent Office / Office européen des brevets**

(11) **EP 2 991 076 A1**

(12) **EUROPEAN PATENT APPLICATION**

(43) Date of publication:
02.03.2016 Bulletin 2016/09

(51) Int Cl.:
*G11B 27/031* (2006.01)

(21) Application number: 14306324.6

(22) Date of filing: 28.08.2014

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME

(71) Applicant: **Thomson Licensing**
**92130 Issy-les-Moulineaux (FR)**

(72) Inventors:
• **Demoulin, Vincent**
**35576 CESSON SEVIGNE CEDEX (FR)**
• **Guermoud, Hassane**
**35576 CESSON SEVIGNE CEDEX (FR)**
• **Thudor, Franck**
**35576 CESSON SEVIGNE CEDEX (FR)**

(74) Representative: **Rolland, Sophie**
**Technicolor**
**1-5, rue Jeanne d'Arc**
**92130 Issy-les-Moulineaux (FR)**

(54) **Method for selecting a sound track for a target video clip and corresponding device**

(57) The invention relates to a method for selecting a sound track for a current video clip comprising a plurality of successive video shots. The method comprises the following steps of:
- determining (10), among a plurality of video clips having a plurality of successive video shots and a sound track, at least one candidate video clip based on the number of video shots in the current video clip and in the video clips of said plurality of video clips, and
- selecting (20), as sound track for the current video clip, the sound track of one of said one candidate video clip.

This method helps to speed up the process of video clip creation for people with no specific skill in music and video matching.

FIG.2

EP 2 991 076 A1

## Description

### 1. Technical Field

The present invention relates generally to the edition of video clips. More specifically, it relates a method for selecting a sound track for a video clip and a method for editing a video clip.

### 2. Background Art

Today, with the availability of more and more digital devices and dedicated software tools at low price, more and more video clips are generated by non professional users with no specific skill in video edition. This is a time consuming task and very often, the quality of the result is quite poor. A purpose of the present invention is to help the user to generate a better result by assisting him in the choice of the soundtrack to be associated to the video clip.

Music selection is a key point to emphasize the global result. A carefully selected soundtrack can make a video clip much more attractive. But because music is linked with emotion, the music associated to a video clip may highly influence the semantic meaning of the complete video clip.

As a consequence, it is very difficult and maybe not desirable to design a fully automatic music selection algorithm for a given video clip. The paper "Genetic Soundtrack: Creative Matching of Audio to Video" J.Gomes et al., ARTECH 2012, 6th International Conference on Digital Arts, Nov. 2012 discloses an evolutionary approach to the creative matching of audio to a video. It analyzes both media to extract features based on their content, and adopts genetic algorithms, with the purpose of truncating, combining and adjusting audio clips, to align and match them with the video scenes. This method is very complicated since it uses genetic algorithms.

A purpose of the invention is to propose a simple method for helping the end user to select a soundtrack that matches a personal or homemade video clip.

### 3. Summary of Invention

The present invention proposes a method for selecting a sound track for a current video clip, said current video clip comprising a plurality of successive video shots, said method comprising the steps of:

- determining, among a plurality of video clips having a plurality of successive video shots and a sound track, at least one candidate video clip based on the number of video shots in the current video clip and in the video clips of said plurality of video clips, and
- selecting, as sound track for the current video clip, the sound track of one of said one candidate video clip.

Thus, the method of the invention propose to determine, in a database containing a lot of video clips having a sound track, the video clips that best match in terms of temporal structure with the current video clip. The sound tracks of these candidate video clips are possible sound tracks for the current video clip. Then the user selects one of these sound tracks for his video clip.

This method helps to speed up the process of video clip creation for people with no specific skill in music and video matching.

In a specific embodiment, said at least one candidate video clip comprises substantially the same number of video shots than the current video clip.

In a specific embodiment, the total duration of said at least one candidate video clip is substantially the same than the total duration of the current video clip.

In a specific embodiment, the difference between the total duration of said at least one candidate video clip and the total duration of the current video clip is less than a first threshold.

In a specific embodiment, the durations of the video shots of said at least one candidate video clip are substantially identical to the duration of the video shots of the current video clip.

In a specific embodiment, the difference between the duration of the $i^{th}$ video shot in said at least one candidate video clip and the duration of the $i^{th}$ video shot of the current video clip is less than a second threshold, i being an integer.

The present invention relates also to a method for editing a current video clip, said video clip comprising initially a plurality of video shots, said method comprising the steps of:

- determining, among a plurality of video clips having sound track, at least one candidate video clip based on the number of video shots in the current video clip and in the video clips of said plurality of video clips,
- selecting, as sound track for the current video clip, the sound track of one of said one candidate video clip,
- associating the selected sound track to the current video clip.

In a specific embodiment, said at least one candidate video clip is also selected based on the duration of video shots in the current video clip and in the video clips of said plurality of video clips.

In a specific embodiment, after associating the selected sound track to the current video clip, the number of frames of at least one video shot of the current video clip is adjusted to the selected sound track.

The present invention concerns also a device for editing a current video clip, said video clip comprising initially a plurality of video shots, characterized in that said device comprises:

- a first module configured for determining, among a plurality of video clips having sound tracks, at least one candidate video clip based on the number of video shots in the current video clip and in the video clips of said plurality of video clips,
- a second module for selecting, as sound track for the current video clip, the sound track of one of said one candidate video clip, and
- a third module for associating the selected sound track to the current video clip.

Finally, the invention concerns also a computer program product comprising a plurality of program code portions for carrying out the steps of the method as defined hereinabove, when said program is executed by a computer.

**4. Brief description of the drawings**

The invention can be better understood with reference to the following description and drawings, given by way of example and not limiting the scope of protection, and in which:

- Figure 1 is a schematic view illustrating the creation of a video clip;

- Figure 2 is a flow chart of the successive steps implemented when performing a method for selecting a sound track for a video clip according to the invention;

- Figure 3 is a flow chart of the successive steps implemented when performing a method for editing a video clip according to the invention;

- Figure 4 is a schematic view illustrating the adjustment step of the method of Figure 3;

- Figure 5 is a schematic view illustrating a device for editing a homemade video clip according to a specific and non-limitative embodiment of the invention, and

- Figure 6 is an exemplary architecture of the device of Figure 5 according to a specific and non-limitative embodiment of the invention.

**5. Description of embodiments**

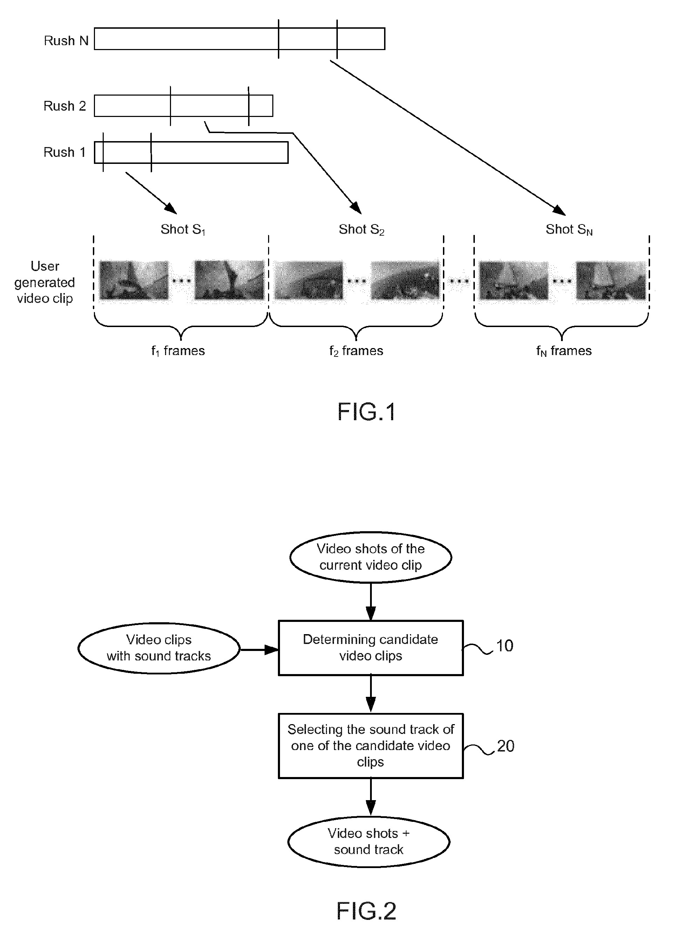

Fig.1 illustrates the creation of a video clip. The video clip comprises a plurality of video shots extracted from a plurality of rushes. These video shots are concatenated to form the video clip. Each video shot comprises a number of frames $f_i$. So every video clip can be described by its number of video shots and the duration of its video shots. The duration of a video shot can be expressed in seconds or by its number of frames. In the example of Figure 1, the video clip comprises N video shots $S_i$, $i \in [1.. N]$, each video shot $S_i$ comprising $f_i$ frames. The video clip depicted on figure 1 may be described by a vector v such that: $v=(f_1,f_2,...,f_N)$. The total duration or length of this clip is given by:

$$Fv = \sum_{n=1}^{N} f_n.$$

The selection of the video shots of the video clip can be the result of a manual work when the user has selected himself the video shots among the rushes or raw video material or it can be automatically generated by a specialized tool such as Muvee Reveal™ that implements a dedicated algorithm based on specific features.

After concatenation of these video shots, a sound track has to be associated to this video track. According to the invention, it is proposed to determine, in a database containing a plurality of video clips having each a sound track, video clips, called candidate video clips, having substantially the same temporal structure and to select the sound track of one of these candidate video clips as the sound track for the current video clip.

These steps are summarized in Figure 2. The method comprises a step 10 for determining the candidate video clips and a step 20 for selecting the sound track of one of the candidate video clip as sound tack for the current video clip.

The step 10 consists in determining, in the database of video clips, the video clips having a temporal structure close to the one of the current video clip. The database can be a user database or a distant shared database in the cloud. If every video clip of the database is described by a vector v and a total length $F_v$ as defined before, this determination consists in determining the video clips having substantially the same vector v and value $F_v$ than those of the current video clip.

In a basic embodiment, in step 10, the candidate video clips having substantially the same number N of video shots than the current video clip are selected.

In a more elaborated embodiment, the candidate video clips having substantially the same number N of video shots and having substantially the same total duration Fv than those of the current video clip are selected in step 10.

In another embodiment, the candidate video clips having substantially the same number N of video shots and having substantially the same total duration Fv than those of the current video clip are selected in step 10.

In another embodiment, the candidate video clips are determined in step 10 such that the difference between the total duration of each candidate video clip and the total duration of the current video clip is less than a threshold TH1. The threshold TH1 is preferably adjustable by the user. At the beginning of the step 10, the user can allocate to this threshold a value close to zero and, if there is no candidate video clip for this value, the value of the threshold is increased.

In another embodiment, the candidate video clips are determined in step 10 such that the durations of the video shots of the candidate video clips are substantially identical to the duration of the video shots of the current video clip.

In another embodiment, the candidate video clips are determined in step 10 such that the difference between the duration of the $i^{th}$ video shot in the candidate video clip and the duration of the $i^{th}$ shot $S_i$ of the current video clip is less than a threshold TH2, with $1 \leq i \leq N$. As for the threshold TH1, the threshold TH2 is preferably adjustable by the user.

The candidate video clips can also be determined by combining these embodiments or by using any other parameters measuring the distance between the temporal structure of the video clips of the database and the temporal structure of the current video clip.

At the end of the step 10, at least one candidate video clip having a sound track is determined. If there is only one candidate video clip, the user selects in step 20 the sound track of this candidate video clip as sound track for the current video clip. If there is a plurality of candidate video clips, the user has to select one candidate video clip among this plurality. The user may listen every candidate video clip and choose one of them as a function of the theme of the video clip and/or of his feeling. It has to be noted that the video clips in the database can be classified into clusters as a function of their theme (humor, action movie,...). In that case, the process for selecting a sound track can comprise a preliminary step consisting in selecting one or more clusters in the database related to the same theme than the current video clip.

The video clips of the database may also have metadata describing the content of the video clips. A preliminary step can also consist in reading these metadata in order to preselect the video clips having a content linked to the one of the current video clip. This selection based on metadata may also be done later in the process, for example after the step 10, in order to reduce the number of candidate video clips if necessary.

This method can be implemented by a processor configured for processing the current video clip and the video clips of the database, determining, among the of video clips of the database, at least one candidate video clip as defined before, and displaying a user interface for selecting, as sound track for the current video clip, the sound track of one of said one candidate video clip.

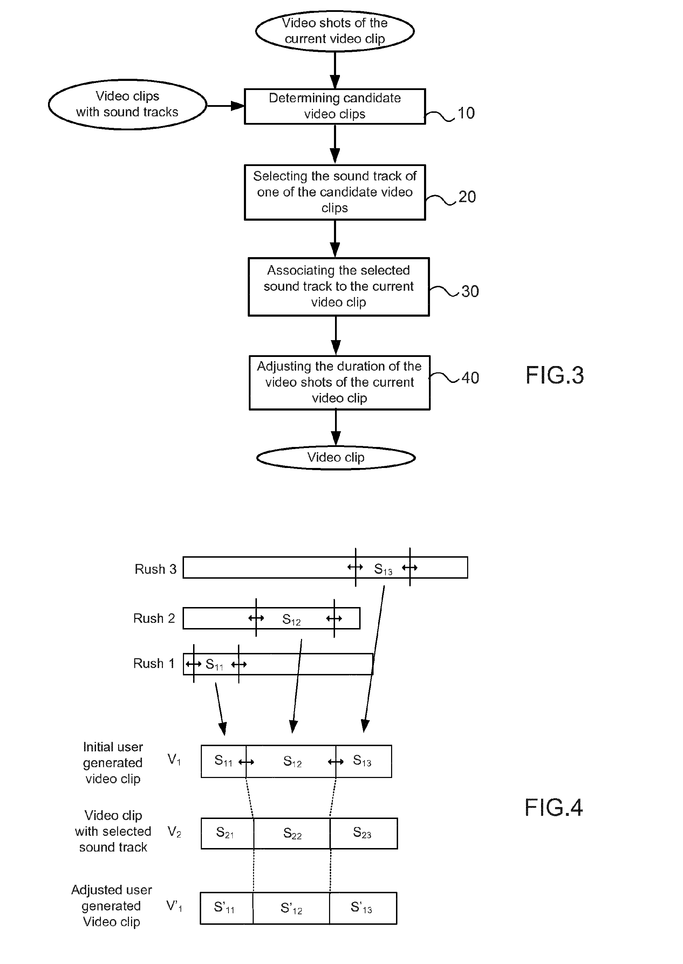

The invention concerns also a method for editing a video clip. This method is illustrated by Figure 3. In addition to the steps 10 and 20 previously described, it further comprises a step 30 for associating the selected soundtrack to the current video clip. The sound track is synchronized to the video shots of the current video clip.

As can been seen from Figure 4, the temporal structure of the candidate video clip whose sound track has been selected may be slightly different from the temporal structure of the current video clip. In Figure 4, $V_1$ designates the current video and $V_2$ designates the candidate video clip whose sound track has been selected. The video clip $V_1$ comprises three successive video shots $S_{11}$, $S_{12}$ and $S_{13}$. The video clip $V_2$ comprises three successive video shots $S_{21}$, $S_{22}$ and $S_{23}$. As can be seen, the duration of the video shots of the video clip $V_1$ are slightly different from the ones of the video clip $V_2$. So, in an elaborated embodiment, it is proposed to adjust the duration of the shots of $V_1$ in order that they have substantially the same duration than the shots of $V_2$ and in order to better match with the sound track of $V_2$.

So, as shown in Figure 4, the editing method of the invention comprises a step 40 for adjusting the duration of at least one video shot of the current video clip $V_1$ to the duration of the video shots of the video clip $V_2$. It is equivalent to indirectly adjust the duration of at least one video shot of the current video clip $V_1$ to the selected sound track. The duration of a shot can be increased by adding frames from the rush from which it derives. These frames are added at the beginning or at the end of the shot. In the same manner, the duration of a shot can be decreased by deleting frames at the beginning or at the end of the shot. The adjusted video clip is referred $V'_1$ in Figure 4 and its adjusted video shots $S'_{11}$, $S'_{12}$ and $S'_{13}$ have the same duration than video shots $S_{21}$, $S_{22}$ and $S_{23}$ of the video clip $V_2$.

Advantageously, a dedicated user interface is provided to assist the user in these temporal adjustments.

The method of the invention has the following advantages:

- it helps to speed up the process of video clip creation for people with no specific skill in music and video matching;
- the user has the final choice of the soundtrack to be associated with the video clip.

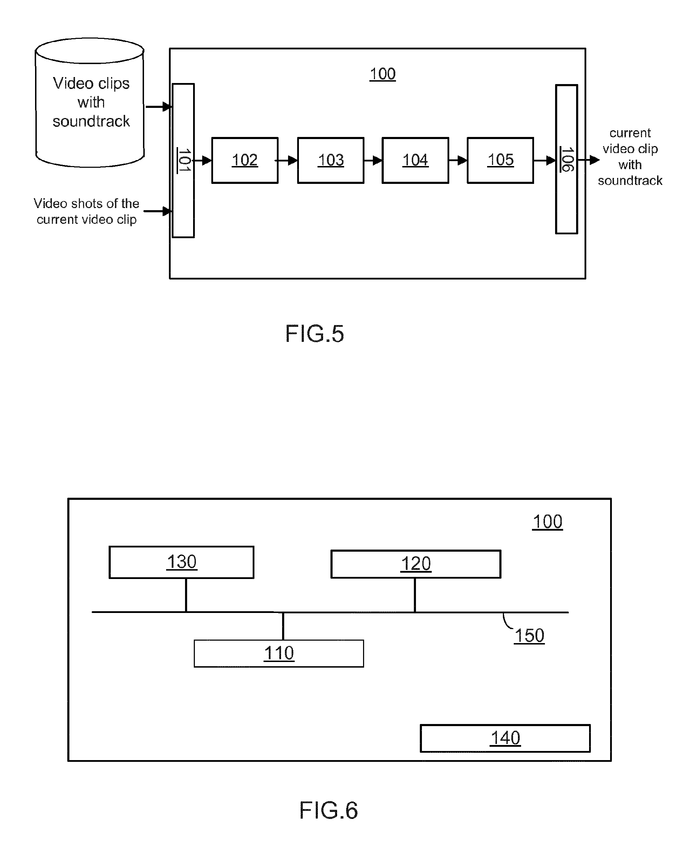

Figure 5 depicts a device 100 for editing a homemade video clip according to a specific and non-limitative embodiment of the invention. The device 100 comprises an input 101 configured to receive the video shots of a current video clip and a plurality of video clips having soundtrack. According to different embodiments of the invention, the source of these audiovisual data belongs to a set comprising:

- a local memory, e.g. a video memory, a RAM, a flash memory, a hard disk;
- a storage interface, e.g. an interface with a mass storage, a ROM, an optical disc or a magnetic support;
- a communication interface, e.g. a wired interface (for example a bus interface, a wide area network interface, a local area network interface) or a wireless interface (such as a IEEE 802.11 interface or a Bluetooth interface); and

- a picture capturing circuit (e.g. a sensor such as, for example, a CCD (or Charge-Coupled Device) or CMOS (or Complementary Metal-Oxide-Semiconductor)).

The input 101 is linked to a module 102 configured to determine, among the plurality of video clips having sound tracks, at least one candidate video clip based on the number of video shots in the current video clip and in the video clips of said plurality of video clips and possibly based on the total durations of the current video clip and the video clips of said plurality of video clips and/or the durations of the video shots in the current video clip and in the video clips of said plurality of video clips. The module 102 is linked to a module 103 configured for selecting the soundtrack of one of the candidate video clip as sound track for the current video clip. The module 103 is advantageously connected to a screen for displaying a user interface to help the user to select one soundtrack. The module is also connected to audio speakers to deliver the soundtrack of the candidate video clips. The module 103 is linked to a module 104 for associating the selected sound track to the current video clip. The module 104 is linked to a module 105 for adjusting the number of frames of the video shots of the current video clip to the selected sound track. This module 105 is advantageously connected to a screen for displaying a user interface to help the user to add or remove frames to the video shots of the current video clip. As visible on Figure 4, this user interface may display the duration of video shots of the current video clip and the duration of the video shots of the candidate video clip whose sound track has been selected. This user interface allows to see the adjustments to be made to the video shots and to directly change the duration of the video shots of the current video clip by moving cursors in the user interface. The module 105 is linked to an output 106. The final current video clip can be stored in a memory. As an example, it is stored in a remote or in a local memory, e.g. a video memory or a RAM, a hard disk.

Figure 6 represents an exemplary architecture of the device 100 according to a specific and non-limitative embodiment of the invention. The device 100 comprises one or more processor(s) 110, which is(are), for example, a CPU, a GPU and/or a DSP (English acronym of Digital Signal Processor), along with internal memory 120 (e.g. RAM, ROM, EPROM). The device 100 comprises one or several Input/Output device(s) 130 for inputting and/or outputting data and/or commands These Input/output devices comprises for example a display device for displaying user interfaces helping the user to select the candidate video clip whose soundtrack is chosen at step 20 and input devices like e.g. a keyboard, a mouse, a touchpad, for entering commands. The modules 110, 120 and 130 are linked together via an address and data bus 150. The device 100 also comprises a power source 140 which may be external to the device 100. The device 100 may also comprise network interface(s) (not shown).

According to an exemplary and non-limitative embodiment of the invention, the device 100 further comprises a computer program stored in the memory 120. The computer program comprises instructions which, when executed by the device 100, in particular by the processor 110, make the device 100 carry out the method described in figure 4. According to a variant, the computer program is stored externally to the device 100 on a non-transitory digital data support, e.g. on an external storage medium such as a HDD, CD-ROM, DVD, a read-only and/or DVD drive and/or a DVD Read/Write drive, all known in the art. The device 100 thus comprises an interface to read the computer program. Further, the device 100 could access one or more Universal Serial Bus (USB)-type storage devices (e.g., "memory sticks.") through corresponding USB ports (not shown).

According to exemplary and non-limitative embodiments, the device 100 is a device, which belongs to a set comprising:

- a mobile device;
- a communication device;
- a game device;
- a tablet (or tablet computer);
- a laptop;
- a still picture camera;
- a video camera;
- an encoding chip;
- a decoding chip;
- a still picture server;
- a video server (e.g. a broadcast server, a video-on-demand server or a web server) ; and
- a video sharing platform.

The foregoing illustrates some of the possibilities for practicing the invention. Many other embodiments are possible within the scope of the invention. It is, therefore, intended that the foregoing description be regarded as illustrative rather than limiting, and that the scope of the invention is given by the appended claims together with their full range of equivalents.

**Claims**

1. Method for selecting a sound track for a current video clip, said current video clip comprising a plurality of successive video shots, **characterized in that** the method comprises the steps of:

  - determining (10), among a plurality of video clips having a plurality of successive video shots and a sound track, at least one candidate video clip based on the number of video shots in the current video clip and in the video clips of said plurality of video clips, and

- selecting (20), as sound track for the current video clip, the sound track of one of said one candidate video clip.

2. Method according to claim 1, wherein said at least one candidate video clip comprises substantially the same number of video shots than the current video clip.

3. Method according to claim 2, wherein the total duration of said at least one candidate video clip is substantially the same than the total duration of the current video clip.

4. Method according to claim 2, wherein the difference between the total duration of said at least one candidate video clip and the total duration of the current video clip is less than a first threshold.

5. Method according to any one of claims 1 to 4, wherein the durations of the video shots of said at least one candidate video clip are substantially identical to the duration of the video shots of the current video clip.

6. Method according to any one of claims 1 to 4, wherein the difference between the duration of the $i^{th}$ video shot in said at least one candidate video clip and the duration of the $i^{th}$ video shot of the current video clip is less than a second threshold, i being an integer.

7. Method for editing a current video clip, said video clip comprising initially a plurality of video shots, **characterized in that** the method comprises the steps of:

    - determining (10), among a plurality of video clips having sound tracks, at least one candidate video clip based on the number of video shots in the current video clip and in the video clips of said plurality of video clips,
    - selecting (20), as sound track for the current video clip, the sound track of one of said one candidate video clip,
    - associating (30) the selected sound track to the current video clip.

8. Method according to claim 7, wherein said at least one candidate video clip is also selected based on the duration of video shots in the current video clip and in the video clips of said plurality of video clips.

9. Method according to claim 7 or 8, wherein, after associating the selected sound track to the current video clip, the number of frames of at least one video shot of the current video clip is adjusted (40) to the selected sound track.

10. Device for editing a current video clip, said video clip comprising initially a plurality of video shots, **characterized in that** said device comprises:

    - a first module (102) configured for determining, among a plurality of video clips having sound tracks, at least one candidate video clip based on the number of video shots in the current video clip and in the video clips of said plurality of video clips,
    - a second module (103) for selecting, as sound track for the current video clip, the sound track of one of said one candidate video clip, and
    - a third module (104) for associating the selected sound track to the current video clip.

11. A computer program product comprising a plurality of program code portions for carrying out the steps of the method according to any one of claims 1 to 6, when said program is executed by a computer.

Rush N

Rush 2

Rush 1

Shot $S_1$

Shot $S_2$

Shot $S_N$

User
generated
video clip

$f_1$ frames

$f_2$ frames

$f_N$ frames

## FIG.1

Video shots of the
current video clip

Video clips
with sound tracks

Determining candidate
video clips — 10

Selecting the sound track of
one of the candidate video
clips — 20

Video shots +
sound track

## FIG.2

FIG.3

FIG.4

FIG.5

FIG.6

Europäisches
Patentamt

European
Patent Office

Office européen
des brevets

# EUROPEAN SEARCH REPORT

Application Number

EP 14 30 6324

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 02/059799 A1 (QUICKTAKES PTY LTD [AU]; GRUBER DANNY [AU]; BUCHANAN PHILIP JOHN [AU]) 1 August 2002 (2002-08-01)<br>* page 10, line 4 - page 12, line 2 *<br>----- | 1-11 | INV.<br>G11B27/031 |
| X | WO 2009/031979 A1 (CREATIVE TECH LTD [SG]; SIM WONG HOO [SG])<br>12 March 2009 (2009-03-12)<br>* page 4, line 11 - page 6, line 19 *<br>----- | 1-11 | |
| A | EP 1 587 111 A1 (MAGIX AG [DE])<br>19 October 2005 (2005-10-19)<br>* abstract *<br>----- | 9 | |

TECHNICAL FIELDS
SEARCHED (IPC)

G11B

The present search report has been drawn up for all claims

| Place of search | Date of completion of the search | Examiner |
|---|---|---|
| The Hague | 2 February 2015 | Mourik, Piet |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 30 6324

This annex lists the patent family members relating to the patent documents cited in the above-mentioned European search report.
The members are as contained in the European Patent Office EDP file on
The European Patent Office is in no way liable for these particulars which are merely given for the purpose of information.

02-02-2015

| Patent document cited in search report | | Publication date | Patent family member(s) | | Publication date |
|---|---|---|---|---|---|
| WO 02059799 | A1 | 01-08-2002 | NONE | | |
| WO 2009031979 | A1 | 12-03-2009 | CN | 101796829 A | 04-08-2010 |
| | | | EP | 2208344 A1 | 21-07-2010 |
| | | | HK | 1146775 A1 | 05-04-2013 |
| | | | SG | 150415 A1 | 30-03-2009 |
| | | | TW | 200920115 A | 01-05-2009 |
| | | | US | 2010226620 A1 | 09-09-2010 |
| | | | WO | 2009031979 A1 | 12-03-2009 |
| EP 1587111 | A1 | 19-10-2005 | EP | 1587111 A1 | 19-10-2005 |
| | | | US | 7512886 B1 | 31-03-2009 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **J.GOMES et al.** Genetic Soundtrack: Creative Matching of Audio to Video. *ARTECH 2012, 6th International Conference on Digital Arts,* November 2012